**Europäisches Patentamt**

**European Patent Office**

**Office européen des brevets**

(19)

(11) Veröffentlichungsnummer : **0 340 646 B1**

(12) # EUROPÄISCHE PATENTSCHRIFT

(45) Veröffentlichungstag der Patentschrift :
**13.05.92 Patentblatt 92/20**

(51) Int. Cl.$^5$ : **A22C 11/02**

(21) Anmeldenummer : **89107675.4**

(22) Anmeldetag : **27.04.89**

(54) **Füllvorrichtung für schlauchförmige Verpackungshüllen.**

(30) Priorität : **06.05.88 DE 8806038 U**

(43) Veröffentlichungstag der Anmeldung :
**08.11.89 Patentblatt 89/45**

(45) Bekanntmachung des Hinweises auf die
Patenterteilung :
**13.05.92 Patentblatt 92/20**

(84) Benannte Vertragsstaaten :
**AT BE CH DE FR GB IT LI NL SE**

(56) Entgegenhaltungen :
**EP-A- 0 171 849**
**EP-A- 0 175 173**
**EP-A- 0 247 462**
**CH-A- 542 751**
**DE-A- 3 600 818**
**DE-U- 8 701 006**

(56) Entgegenhaltungen :
**DE-U- 8 705 899**
**DE-U- 8 805 545**
**FR-A- 2 253 459**
**US-A- 1 505 218**
**US-A- 2 922 186**
**US-A- 4 688 299**

(73) Patentinhaber : **HOECHST**
**AKTIENGESELLSCHAFT**
**Postfach 80 03 20**
**W-6230 Frankfurt am Main 80 (DE)**

(72) Erfinder : **Urban, Rudolf**
**Flechenbornstrasse 20**
**W-6204 Taunusstein 4 (DE)**
Erfinder : **Fritsch, Josef**
**Erlenweg 25**
**W-6204 Taunusstein 2 (DE)**
Erfinder : **Schön, Klaus-Peter**
**Rathenauplatz 14**
**W-6200 Wiesbaden (DE)**

**Beschreibung**

Die Erfindung bezieht sich auf eine Vorrichtung zum Füllen von schlauchförmigen Hüllen mit pastösem Füllgut, insbesondere zum Füllen von künstlichen Wursthüllen mit Wurstmasse. Solche Vorrichtungen bestehen aus einem Gehäuse für das pastöse Füllgut, welches gewöhnlich über einen Trichter von oben mit dem pastösen Füllgut beschickt wird. Das Füllgut wird beim Füllvorgang aus dem Gehäuse durch das Füllrohr in die schlauchförmige Hülle ausgepreßt. Die zu füllende Hülle befindet sich in geraffter Form als sogenannte Raupe auf dem Füllrohr und wird durch das eingepreßte Füllgut enttrafft und vom Füllrohr abgezogen. Um die Hülle prall und faltenfrei mit dem Füllgut auszufüllen, ist es erforderlich, den Abzug der Hülle vom Füllrohr durch eine Bremse zu verzögern. Die Bremse befindet sich in der Nähe der Füllrohröffnung und preßt die enttraffte schlauchförmige Hülle mit einstellbarer Kraft gegen die Außenseite des Füllrohrs.

Die bisher bekannten Vorrichtungen dieser Art sind nicht geeignet, um gleichzeitig mit dem Füllvorgang auf die äußere Oberfläche der mit Füllgut versehenen schlauchförmigen Hülle einen Netzschlauch aufzubringen. Deshalb werden diese Netze gewöhnlich erst auf die fertiggestellte, gefüllte Hülle aufgebracht. Es ist somit Aufgabe der Erfindung, die bekannten Vorrichtungen so weiterzubilden, daß sie das kontinuierliche Aufbringen von schlauchförmigen Netzen auf die schlauchförmige Hülle während des Füllvorgangs gestatten.

Diese Aufgabe wird gelöst durch die Vorrichtung mit den in Anspruch 1 angegebenen Merkmalen. Die abhängigen Ansprüche geben zweckmäßige Ausführungen der Vorrichtung an.

Das erfindungswesentliche Merkmal der Vorrichtung besteht in einem zylinderförmigen Trägerrohr für den Netzschlauch. Das Trägerrohr erstreckt sich koaxial um die Außenseite des Füllrohrs und ist etwa gleich lang wie das Füllrohr. Es ist an einem Ende wie das Füllrohr am Gehäuse oder an einem Gehäuseteil der Füllvorrichtung befestigt oder lösbar verbunden. Es endet an der gegenüberliegenden Seite in der Nähe der Füllrohröffnung, durch die das Füllgut beim Füllvorgang in die Hülle ausgepreßt wird. Der Abstand zwischen der Außenseite des Füllrohrs und der Innenwandung des Trägerrohrs ist praktisch an jeder Stelle gleich groß und wird so gewählt, daß dieser Zwischenraum die zu füllende, geraffte Schlauchhülle aufnehmen kann.

Die den Ablauf der Schlauchhülle vom Füllrohr während des Füllvorgangs verzögernde Bremse besteht aus einem flexiblen Bremsring, der das Füllrohr umgibt und mit dessen Außenseite einen kreisringförmigen Spalt bildet, durch den die enttraffte schlauchförmige Hülle beim Füllvorgang abgezogen wird. Durch geeignete Elemente wird der Bremsring mit einstellbarer Kraft gegen die enttraffte Hülle gepreßt. Je stärker diese Kraft ist, um so stärker wird die Hülle zurückgehalten, desto langsamer wird die Hülle vom eingepreßten Füllgut abgezogen und desto stärker wird sie unter dem Fülldruck aufgedehnt. Durch diese veränderbare Rückhaltekraft ist somit das Füllkaliber der Hülle einstellbar.

Eine Bremse dieser Art wird beispielsweise in DE-U-87 05 899.5 beschrieben. Sie besteht aus einem flexiblen Bremsring, welcher durch eine dahinter angeordnete axial auf dem Füllrohr verschiebbare Ringmutter in Füllrichtung gegen einen davor fixierten ringförmigen Anschlag gedrückt werden kann.

Diese drei wesentlichen Bauteile, welche auch nach der vorliegenden Erfindung die Bremse bilden, nämlich Bremsring, axial verschiebbares Ringelement und ringförmiger Anschlag, sind unmittelbar am Ende des Trägerrohrs in der Nähe der Füllrohröffnung angebracht. Der äußere Umfang der drei Bauteile der Bremse muß jeweils so klein dimensioniert werden, daß der beim Füllvorgang vom Trägerrohr ablaufende Netzschlauch problemlos über die Außenseite dieser Bauteile hinweggezogen wird. In der Praxis ist deshalb dieser äußere Umfang nicht größer als der Außenumfang des Trägerrohres. Dies ist erforderlich, da der Netzschlauch nicht wie die schlauchförmige Hülle durch die ringförmigen Innenbohrungen der die Bremse bildenden Bauteile hindurchgezogen wird.

Aus konstruktiven Gründen wird jedoch die gesamte Bremse vorzugsweise im Innern des Trägerrohrs angeordnet. Um die Rückhaltekraft der Bremse variieren zu können, ist es dann zweckmäßig, anstelle der in der DE-U-87 05 899.5 gezeigten axial verschiebbaren Ringmutter einen festen ringförmigen Anschlag hinter dem Bremsring und umgekehrt anstelle eines in der Nähe der Füllrohröffnung vorhandenen ringförmigen Anschlags ein axial verschiebbares Ringelement vor dem Bremsring anzubringen.

Hierzu wird im Innern des Trägerrohrs anstelle einer Ringmutter ein ringförmiges Widerlager hinter dem Bremsring angeordnet und mit der Innenwand des Trägerrohrs fest verbunden. Das ringförmige Widerlager zeigt eine zentrale kreisförmige Innenbohrung, deren Durchmesser größer ist als der äußere Füllrohrdurchmesser. Das ringförmige Widerlager umgibt die Außenseite des Füllrohrs. Die Innenbohrung des ringförmigen Widerlagers bildet mit der Außenseite des Füllrohrs einen kreisringförmigen Spalt, den die enttraffte schlauchförmige Hülle im wesentlichen reibungsfrei durchlaufen kann.

Anstelle des ringförmigen Anschlags nach DE-U-87 05 899.5 wird erfindungsgemäß eine axial verschiebbare Andrückschraube verwendet, welche sich an der Öffnung des Trägerrohres befindet und den Bremsring im Innern des Trägerrohres in Gegenrichtung zur Füllrichtung auf das dahinter fixierte ringförmige Widerlager im Innern des Trägerrohrs preßt. In bevorzugter Ausführungsform befindet sich auch die Andrückschraube vollständig im Innern des Trägerrohres und ist über ein Außengewinde an ihrem kreisförmigen Außenumfang in einem Innengewinde an der Innenwand des Trägerrohres in axialer Richtung verschiebbar.

Damit der Bremsring infolge der von der Andrückschraube ausgeübten Preßkraft in Richtung auf die Außenseite des Füllrohrs und damit auf die Hülle gedrückt wird, zeigt er die bekannte kegelstumpfförmige Oberfläche, die in der Nähe der Füllrohraußenseite und benachbart zur Andrückschraube in einer ringförmigen Bremslippe endet. Die Andrückschraube zeigt eine zur kegelstumpfförmigen Oberfläche des Bremsrings geneigte Seitenfläche, wie sie auch beim ringförmigen Anschlag nach DE-U-87 05 889.5 vorhanden ist. Der innere Hohlraum der Andrückschraube ist kreiszylinder- oder kreisringförmig. Sein Durchmesser ist nur wenige Millimeter, vorzugsweise 1 bis 4 mm größer als der Außendurchmesser des Füllrohres. Der innere Hohlraum der Andrückschraube bildet zusammen mit der Außenseite des Füllrohres einen kreisringförmigen Durchlaß für die entraffte Hülle.

An der äußeren Stirnseite der Andrückschraube, die durch die Öffnung des Trägerrohres in der Nähe der Füllrohröffnung von außen zugänglich ist, befinden sich Greifelemente, über die sich die Andrückschraube in dem Gewinde axial verschieben läßt. Diese Greifelemente sind vorzugsweise Vertiefungen, in die mittels eines geeigneten Schlüssels eingegriffen werden kann. Durch Verdrehen der Andrückschraube mit diesem Schlüssel wird sie entgegengesetzt zur Füllrichtung gegen den Bremsring und dieser gegen das ringförmige Widerlager gepreßt.

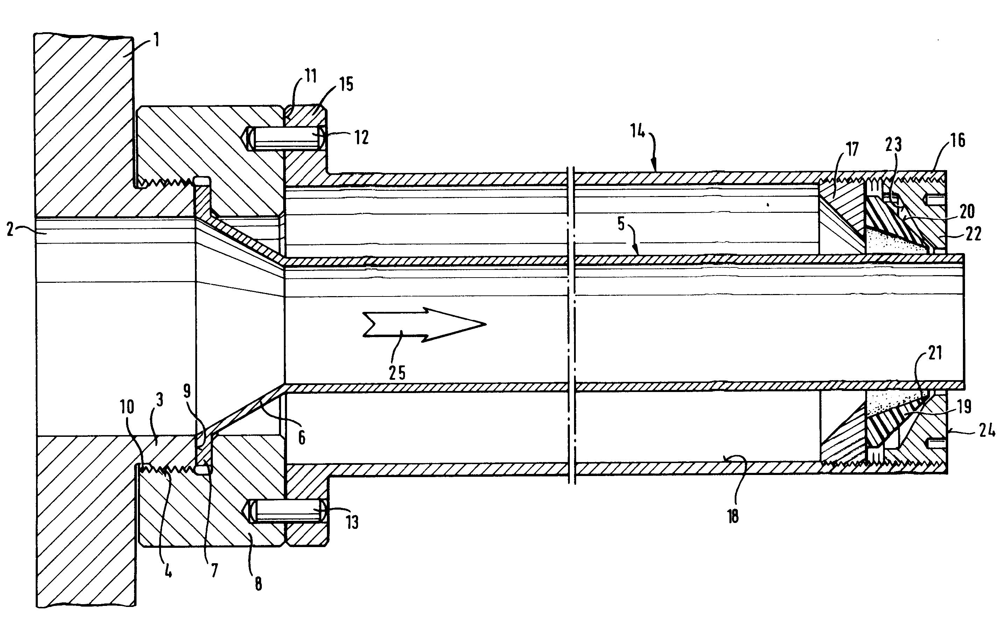

Die Erfindung wird anhand der Figur näher erläutert. Sie zeigt eine Ausführungsform in Seitenansicht im Schnitt.

Die Füllvorrichtung besteht aus einem Gehäuse zur Aufnahme des Füllguts. In der Gehäusewand 1 befindet sich die Öffnung 2 mit einem ringförmigen Bund 3, der ein Außengewinde 4 aufweist. Das Füllrohr 5 ist mit seinem trichterförmigen Ende 6, das sich zu einem kreisringförmigen Flanschrand 7 aufweitet, durch die Mutter 8 an der Stirnseite 9 des Bundes 3 fixiert. Die Mutter 8 ist ist mit ihrem Innengewinde 10 auf das Außengewinde 4 des Bundes 3 aufgeschraubt. An der Seitenfläche 11 der Mutter 8 sind Zentrierstifte 12,13 vorhanden, welche das Trägerrohr 14 in koaxialer Lage zum Füllrohr 5 halten. Die Zentrierstifte 12,13 durchdringen den nach außen abstehenden kreisringförmig umlaufenden Flanschrand 15 des Trägerrohrs 14. Der Flanschrand 15 ist mit Halteelementen, z.B. Schrauben oder Klammern, mit der Mutter 8 verbunden, die in der gezeigten Schnittebene nicht sichtbar sind.

Am Ende 16 des Trägerrohrs 14 befindet sich ein ringförmiges Widerlager 17, das an der Innenwand 18 des Trägerrohrs 14 ortsfest fixiert ist, ein flexibler Bremsring 19 mit kegelstumpfförmiger Oberfläche 20, der in der Bremslippe 21 endet, und eine Andrückschraube 22 mit einer zum Bremsring 19 geneigten Seitenfläche 23 und der äußeren Stirnseite 24. Die Andrückschraube 22 ist mit einem am Außenumfang vorhandenen Gewinde in ein an der Innenwand 18 des Trägerrohrs 14 vorhandenes Gewinde eingeschraubt und durch Verdrehen axial verschiebbar. Der Pfeil 25 deutet die Füllrichtung an.

Bei der bevorzugten Verwendung der Vorrichtung zum Einpressen von Wurstbrät in eine künstliche Wursthülle wird die geraffte schlauchförmige Hülle auf das Füllrohr 5 und ein zusammengeschobener Netzschlauch auf das Trägerrohr 14 aufgebracht. Die Hülle wird zwischen der Oberfläche des Füllrohrs 5 und den Bremseinheiten 17, 19,22 hindurchgeführt und an der Füllrohröffnung gemeinsam mit dem über das Ende 16 des Trägerrohres 14 gezogenen Netzschlauch mit einem Clip verschlossen. Die Andrückschraube 22 wird durch Verdrehen gegen den Bremsring 19 verschoben und dieser mit seiner Bremslippe 21 auf die äußere Oberfläche der Hülle und diese gegen die Oberfläche des Füllrohrs 5 gepreßt. Durch die Öffnung 2 in der Gehäusewand 1 tritt Wurstbrät unter Druck in das Füllrohr 5 und durch die Füllrohröffnung in die schlauchförmige Hülle. Durch die von der Bremslippe 21 ausgeübte Rückhaltekraft wird die Hülle von der eingepreßten Wurstmasse aufgedehnt und prall gefüllt. Nach Erreichen der gewünschten Wurstlänge wird ein zweiter Clip gesetzt, der die schlauchförmige Hülle verschließt und gleichzeitig den Netzschlauch fixiert. Der Clip umschließt somit wie am Wurstanfang die innenliegende Hülle und den sie umgebenden Netzschlauch.

**Patentansprüche**

1. Vorrichtung zum Füllen schlauchförmiger Hüllen mit pastösem Füllgut, insbesondere zum Füllen von künstlichen Wursthüllen mit Wurstmasse, aufgebaut aus einem Füllrohr (5), auf dessen Außenseite während des Füllvorgangs ein geraffter Hüllenvorrat vorhanden ist und durch dessen Füllrohröffnung das pastöse Füllgut in die schlauchförmige Hülle gepreßt wird, und einer die Außenseite des Füllrohrs in der Nähe der Füllrohröffnung ringförmig umgebenden Bremse (17), (19), (22), wobei die Bremse derart ausgebildet ist, daß sie beim Füllvorgang die schlauchförmige Hülle gegen die Außenseite des Füllrohrs (5) preßt und dadurch den Ablauf der schlauchförmigen Hülle vom Füllrohr verzögert, dadurch gekennzeichnet, daß das Füllrohr von einem koaxialen zylinderförmigen Trägerrohr (14) für einen Netzschlauch umgeben ist, welches im Abstand zur Außenseite des Füllrohrs angeordnet ist und sich bis in die Nähe der Füllrohröffnung erstreckt, wobei sich an diesem Ende des Trägerrohrs die Bremse (17), (19), (22) befindet und wobei der äußere Umfang der die Bremse bildenden Bauteile jeweils so klein dimensioniert ist, daß der beim Füllvorgang vom Trägerrohr ablaufende Netzschlauch problemlos über die Außenseite dieser Bauteile hinweggezogen wird.

2. Vorrichtung nach Anspruch 1, dadurch gekennzeichnet, daß sich die Bremse vollständig im Innern des Trägerrohres befindet.

3. Vorrichtung nach Anspruch 2, dadurch gekennzeichnet, daß die Innenwandung des Trägerrohres an dem der Füllrohröffnung benachbarten Ende des Trägerrohres ein Innengewinde aufweist, daß sich im Innern des Trägerrohres eine das Füllrohr umgebende Andrückschraube befindet, die über ein Außengewinde in dieses Innengewinde eingeschraubt ist und sich über Greifelemente an ihrer äußeren Stirnseite von außen verdrehen läßt, daß sich benachbart zu dieser Andrückschraube in Richtung entgegengesetzt zur Füllrichtung ein Bremsring und nachfolgend ein ringförmiges, ortsfestes Widerlager anschließt, wobei der Bremsring durch Verdrehen der Andrückschraube gegen das Widerlager und in Richtung auf die Außenseite des Füllrohrs verschiebbar ist.

## Claims

1. A device for filling tubular casings with a pasty product, in particular for stuffing artificial sausage casings with sausage meat, made up of a stuffing horn (5), on the outside of which a supply of shirred casing material is present during the filling operation and through the orifice of which the pasty product is pressed into the tubular casing and a brake (17), (19), (22) which encircles the outside of the stuffing horn in the vicinity of the orifice thereof, the brake being designed in such a manner that it urges the tubular casing against the outside of the stuffing horn (5) during the filling operation, thereby retarding the removal of the tubular casing from the stuffing horn, wherein the stuffing horn is surrounded by a coaxial, cylindrical support tube (14) for a tubular net, which support tube is arranged at a distance from the outside of the stuffing horn and extends up to the vicinity of the orifice of the stuffing horn, the brake (17), (19), (22) being located at this end of the support tube and the outer circumference of the components forming the brake being, in each case, dimensioned to be small enough for pulling the tubular net, which runs off from the support tube during the filling operation, over the outside of these components without difficulty.

2. The device as claimed in claim 1, wherein the brake is disposed entirely in the interior of the support tube.

3. The device as claimed in claim 2, wherein the internal wall of the support tube has an internal thread at the end of the support tube, which is adjacent to the orifice of the stuffing horn, wherein a pressing screw which encompasses the stuffing horn is located in the interior of the support tube and is screwed into the internal thread of the support tube via an external thread and can be turned from the outside by means of gripper elements provided in its outer end face and wherein, adjacent to this pressing screw and in a direction counter to the stuffing direction, a brake ring is disposed, followed by an annular, stationary stop, the brake ring being displaceable towards the stop and in the direction of the outside of the stuffing horn by turning the pressing screw.

## Revendications

1. Dispositif de remplissage d'enveloppes tubulaires d'un produit pâteux, notamment pour bourrer des boyaux synthétiques de chair à saucisses, constitué d'un tube de remplissage (5), sur le côté extérieur duquel une réserve d'enveloppe plissée est présente pendant le remplissage, et par l'ouverture duquel le produit pâteux est pressé dans l'enveloppe tubulaire, et d'un frein (17), (19), (22) qui entoure annulairement le côté extérieur du tube de remplissage à proximité de l'ouverture de ce dernier, le frein étant conçu de telle sorte qu'il pousse l'enveloppe tubulaire contre le côté extérieur du tube de remplissage (5) pendant le remplissage et retarde ainsi la séparation de l'enveloppe tubulaire du tube de remplissage, **cactérisé** en ce que le tube de remplissage est entouré d'un tube de support coaxial et cylindrique (14) pour un filet tubulaire, tube qui est disposé à distance du côté extérieur du tube de remplissage et s'étend jusqu'à proximité de l'ouverture de ce dernier, le frein (17), (19), (22) se trouvant à cette extrémité du tube de support et la circonférence externe de chacun des éléments constitutifs du frein étant suffisamment petite pour que le filet tubulaire se dégageant du tube de support lors du remplissage soit tiré sans problème sur le côté extérieur de ces éléments.

2. Dispositif selon la revendication 1, caractérisé en ce que le frein est disposé entièrement à l'intérieur du tube de support.

3. Dispositif selon la revendication 2, caractérisé en ce que la paroi interne du tube de support présente un filetage intérieur à l'extrémité du tube de support qui est voisine de l'ouverture du tube de remplissage, en ce qu'une vis de pression se trouve à l'intérieur du tube de support, vis qui entoure le tube de remplissage, est vissée par un filetage extérieur dans le filetage intérieur du tube de support et peut être tournée de l'extérieur au moyen d'éléments de préhension prévus sur sa face terminale extérieure, et en ce qu'une bague de freinage suivie d'une butée fixe annulaire est disposée au voisinage de cette vis de pression en sens opposé du sens de remplissage, la bague de freinage pouvant, en tournant la vis de pression, être déplacée vers la butée et en direction du côté extérieur du tube de remplissage.